Europäisches Patentamt

European Patent Office

Office européen des brevets

(11) Publication number: **0 162 612**
**B1**

## EUROPEAN PATENT SPECIFICATION

(45) Date of publication of patent specification: **27.12.90**

(51) Int. Cl.⁵: **H 04 N 7/087**

(21) Application number: **85302969.2**

(22) Date of filing: **26.04.85**

(54) **Receiver for a character broadcasting system.**

(30) Priority: **27.04.84 JP 86826/84**

(43) Date of publication of application:
**27.11.85 Bulletin 85/48**

(45) Publication of the grant of the patent:
**27.12.90 Bulletin 90/52**

(84) Designated Contracting States:
**DE FR GB**

(56) References cited:
GB-A-2 033 699
GB-A-2 075 730
US-A-4 336 611
US-A-4 349 904
US-A-4 426 698

MINI-MICRO CONFERENCE RECORD, 8th-11th November 1983, pages 1-6, San Francisco, CA, US; B. ASTLE et al.: "NABTS teletext for the consumer market"

(73) Proprietor: **MITSUBISHI DENKI KABUSHIKI KAISHA**
**2-3, Marunouchi 2-chome Chiyoda-ku**
**Tokyo 100 (JP)**

(72) Inventor: **Shibasaki, Takeshi**
**Seishinryo 10 Ndoji-cho 2-chome**
**Itami-shi Hyogo-ken (JP)**

(74) Representative: **Beresford, Keith Denis Lewis et al**
**BERESFORD & Co. 2-5 Warwick Court High Holborn**
**London WC1R 5DJ (GB)**

(56) References cited:
IEEE TRANSACTIONS ON CONSUMER ELECTRONICS, vol. CE-26, no. 3, August 1980, pages 578-585, IEEE, New York, US; J.R. STOREY et al.: "A description of the broadcast telidon system"

N.H.K. LABORATORIES NOTE, no. 291, October 1983, pages 1-19; A. YANAGIMACHI et al.: "An experimental second-generation Japanese teletext system"

Courier Press, Leamington Spa, England.

# EP 0 162 612 B1

**Description**

The present invention relates to a receiver for receiving a code transmission system character broadcasting signal transmitted inserted in the vertical blanking period of television video signal.

Recently, it is planned a code transmission system character broadcasting as a type of television broadcasting in which characters such as weather forecast or news are broadcast to be displayed on the CRT. In such a character broadcasting, the character information is transmitted inserted in the vertical blanking period of the video signal as digital data. At the receiver's side these character information are stored in a memory of a receiver temporarily, and these are converted into signals capable of being displayed on the CRT by a decoder or the like, and displayed on the same.

The European Patent Office search has revealed that:—

Means to detect and simultaneously correct errors in video text-signals is discussed in N.H.K. Laboratories Note No. 291, October 1983 (Pages 1—19): A. Yanagimachi et al—"An experimental second-generation Japanese teletext system".

Likewise, means to detect and simultaneously correct errors in video text-signals is discussed in IEEE Transactions on Consumer Electronics, Vol. CE-26, No. 3, August 1980 (Pages 578—585), IEEE New York, US: J. R. Storey et al—"A description of the broadcast telidon system".

A simultaneous error detection and correction technique in a data processing system is known from GB—A—2 075 730 and US—A—4 336 611.

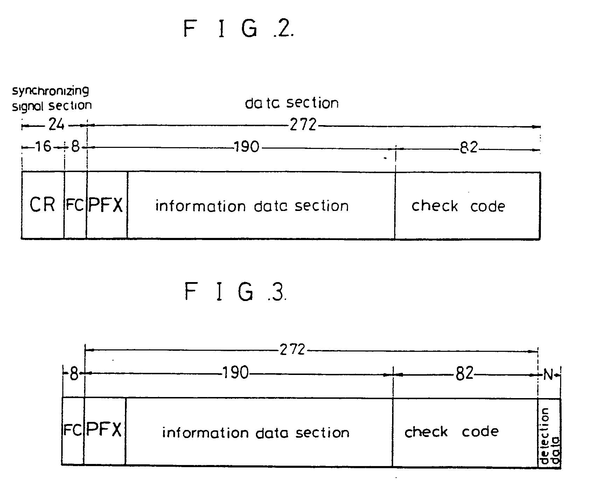

Besides a switching means arranged to switch a character or data signal having no code error from a buffer memory to an output unit so that an error correction operation is performed by means of an error detection and correction circuitry only if an error is denoted by the error detector, is known from Figure 2 of US—A—4336611.

It is an object of the present invention to improve the operation of a receiver as is described in the preamble of claim 1.

According to the present invention such a receiver for receiving a code transmission system character and broadcasting a character signal which is inserted in, and transmitted during, the vertical blanking period of television video signal, which comprises:

an extracting circuit for extracting a character signal inserted in the video signal;

a detector means for detecting the existence or non-existence of a code error in the character signal during the horizontal scanning period following the vertical blanking period in which the character signal is inserted and outputting a detection signal;

a buffer memory for storing the character signal accompanied by the detection signal temporarily;

a correcting means for correcting an error in the character signal read out from the buffer memory as denoted by the detection signal; and

character signal decoding means is characterised in that first switching means associated with the extracting circuit is switchable between a first condition in which the video signal is directed to the extracting circuit for extraction of the character signal and a second condition in which the output of a corrected character signal is directed from said correction means to said buffer memory;

and second switching means associated with the detection means and correction means switchable between a first condition in which the video signal is received by the detecting means for said code error detection and storage of the character signal and, if an error exists, of an error bit in said buffer memory and a second condition in which, in response to the presence of a said stored error bit, the stored character signal and error bit are directed to said correction means whereby said character signal is corrected and via said first switching means switched into its second condition, restored to said buffer memory, wherein the switching means are only switched from their respective first conditions to their second conditions in response to the presence of a said stored error bit in the buffer memory.

In a preferred embodiment, in the error code correction the majority code of the information data is divisible by a generation polynomial G(X) when there is no code error, said polynomial G(X) being defined by the formula:

$$G(X) = X^{82} + X^{77} + X^{76} + X^{71} + X^{67} + X^{66} + X^{56}$$
$$+ X^{52} + X^{48} + X^{40} + X^{36} + X^{34} + X^{24} + X^{22}$$
$$+ X^{18} + X^{10} + X^{4} + 1$$

Where, the check codes $X^{81}$, $X^{80}$, ..., $X^{1}$, $X^{0}$ are remainders obtained by dividing the information bits $X^{271}$, $X^{270}$, ..., $X^{83}$, $X^{82}$ by the above-described generation polynominal G(X).

Preferably, the decoding means is included in a central processing unit the central processing unit being arranged to retrieve the detection signal from the buffer memory so as to determine whether or not to perform an error correction operation.

Advantageously, the buffer memory is arranged to store the character signal again after error correction.

In the preferred embodiment, the means for detecting a code error also includes the means for correcting the code error.

Embodiments of the present invention now being described with reference to the accompanying

2

drawings; it should be understood, however, that the detailed description and specific embodiment are given by way of illustration only, since various changes and modifications within the scope of the invention will become apparent, to those skilled in the art, from this detailed description.

Figure 1 is a schematic diagram of a receiver for receiving a code transmission system character broadcasting signal as an embodiment of the present invention;

Figure 2 is a diagram showing a construction of a character signal inserted in the video signal;

Figure 3 is a diagram showing a construction of a character signal to which the character extraction and error detection are executed; and

Figure 4 is a diagram showing a construction of the main portion of the device of Figure 1.

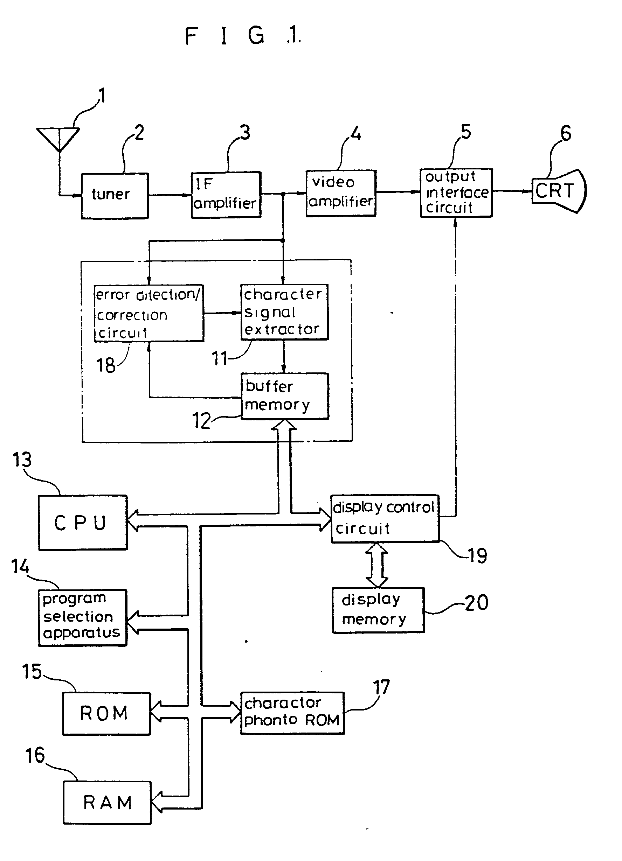

In order to explain an embodiment of the present invention, reference will be more particularly made to Figure 1:

The reference numeral 1 designates an antenna, the numeral 2 designates a tuner, the numeral 3 designates an intermediate frequency (hereinafter referred to as "IF") amplifier intended to detect the video signal obtained by the tuner 2. The numeral 11 designates a circuit for extracting a character signal from the video signal. The numeral 18 designates a circuit intended to only detect the existence or non-exitence of a code error in the character signal at the same time as the extraction of the character signal. The numeral 12 designates a buffer memory for storing temporarily the character signal obtained by adding the detection signal from the circuit 18 to the output of the character signal extracting circuit 11. The error detection circuit 18 has also a function to correct a code error in the character signal at a different time from that of error detection, if any.

The numeral 13 designates a central processing unit (hereinafter referred to as "CPU") intended to interpret the character signal in the buffer memory 12 as well as to control the whole system of this receiver. The numeral 19 designates a display control circuit intended to control the display of the character signal by an instruction from the CPU 13. The numeral 20 designates a display memory for storing the interpreted character signal. The numeral 14 designates a program selection apparatus. The numeral 15 designates a programmable ROM for the CPU 13. The numeral 16 designates a work RAM. The numeral 17 designates a character phonto ROM used for decoding the character signal to generate a character or a figure.

Furthermore, the numeral 4 designates a video amplifier intended to amplify the output of the IF amplifier 3. The numeral 5 designates an output interface circuit for switching to display the video signal from the video amplifier 4 or the character signal read out from the display memory 20 through the display control circuit 19 on the CRT 6 as well as conducting level switching.

Figure 2 shows a construction of a data packet for the character signal. The synchronizing signal section is constituted by a clock-run-in CR of 16 bits at the head of the data packet, and a framing code FC of 8 bits following the clock-run-in CR, both of which are in a special code construction. The data section is constituted by a prefix PFX and an information data section totally amounting to 190 bits, and a check code of 82 bits. The check code of 82 bits is an error correction code of a transmission level for correcting errors occurred in the data of the data section of 190 bits including the prefix PFX.

Figure 3 shows a construction of a data packet to which the extraction of character signal is executed. This is a construction of data stored in the buffer memory 12 temporarily after processed by the character signal extracting circuit 11 and the error detection/correction circuit 18. This data packet is constituted by the data section of 190 bits including the prefix PFX, the check code of 82 bits, and a detection code of N bits for indicating the existence or non-existence of a code error in the data packet. The N bit detection data is added to the data packet after the detection of existence or non-existence of a code error is conducted in the horizontal scanning period (from No. 10H to No. 16H, No. 21H, No. 273H to No. 279H or No. 284H) where the data packet is inserted at the same time as the extraction of the character signal.

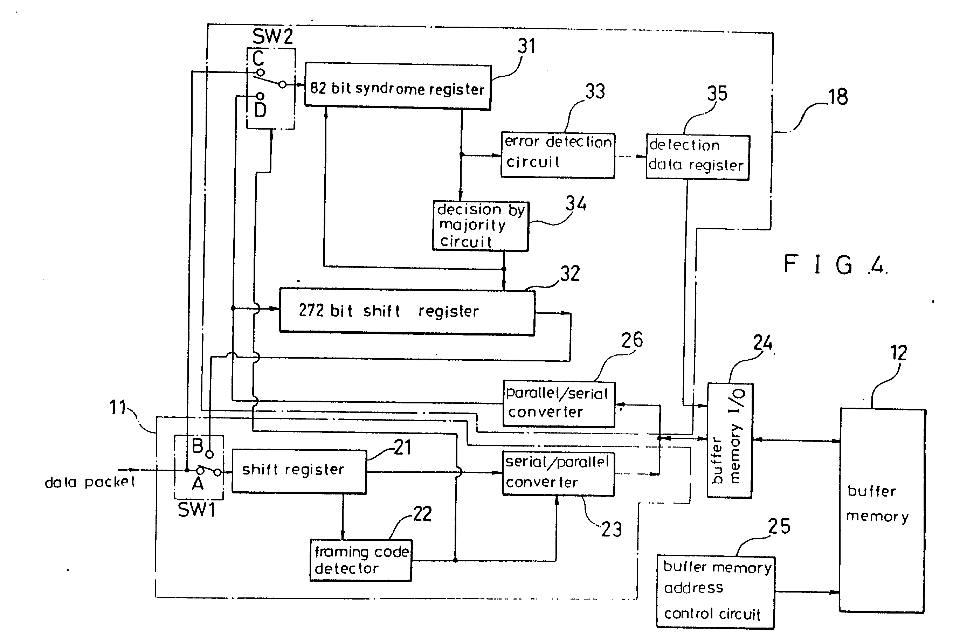

Figure 4 shows an example of a circuit construction surrounded by dotted lines in Figure 1, including the character signal extracting circuit 11, the error detection/correction circuit 18, and the buffer memory 12:

The character signal extracting circuit 11 is constituted by a first switch SW1, a shift register 21, a framing code detector 22, and a serial/parallel converter 23. The error detection/correction circuit 18 is constituted by a second switch SW2, an 82 bit syndrome register 31, a 272 bit shift register 32, an error detection circuit 33, a decision by majority circuit 34, a detection data register 35, and a parallel/serial converter 26. The numeral 24 designates a buffer memory I/O, and the numeral 25 designates a buffer memory address control circuit.

At first, the operation of this device is briefly described in the following with reference to Figure 1:

The character signal is transmitted inserted in the vertical blanking period of television signal. The television video signal is received by the antenna 1 and the tuner 2, and detected by the IF amplifier 3. The character signal extracting circuit 11 extracts the character signal from the detected video signal. At the same time, the existence or non-existence of a code error is detected by the error detection/correction circuit 18, and the signal (refer to Figure 3) obtained by adding the detection date (N bit data) to the character signal is temporarily stored in the buffer memory 12.

The character signal stored in the buffer memory 12 is subjected to a code error correction in the error detection/correction circuit 18, and stored in the buffer memory 12 again. The character signal to which the code error correction is executed in this way is decoded by the CPU 13, and stored in the display memory 20 through the display control circuit 19. The video signal from the video amplifier 4 or the character signal read out from the display memory 20 selected by the output interface circuit 5 is displayed on the CRI 6.

The operation of the character signal extraction and the error detection and correction are described in detail in the following with reference to Figure 2 or 4:

In the character signal extraction and error detection, the switch SW1 is connected to the side of the terminal A, and the data packet shown in Figure 2 is input to the shift register 21. The framing code FC is detected by the framing code detector 22, and the data in the shift register 21 beginning from the framing code FC is converted from serial to parallel by the serial/parallel converter 23, and the converted data is stored in the buffer memory 12 through the buffer memory I/O 24.

The detection of a code error is conducted concurrently with the extraction of the character signal: that is, the switch SW2 is connected to the side of the terminal C after the framing code FC is detected by the FC detector 22. Therefore, the data of 272 bits starting from the prefix PFX is input to the 82 bit syndrome register 31. When except for one all of the contents of the 82 bit syndrome register 31 are "0", that is, when one of them is "1", a code error exists and the existence of this code error is detected by the error detection circuit 33. This detection result is output from the detection data register 35 as N bit data, and is stored in the buffer memory 12 through the buffer memory I/O 24.

In this way, the data packet inserted in the video signal is stored in the buffer memory 12 in real time, and becomes to have a construction shown in Figure 3.

In the next place, the operation of error correction is described:

The CPU 13 retrieves the N bit detection data in the data packet stored in the buffer memory 12, and judges whether an error exists in the data packet or not. When no error exists, the code is immediately decoded. When an error exists, the switch SW2 is switched to the side of the terminal D to operate the 82 bit syndrome register 31 and the 272 bit shift register 32, whereby the data packet including an error is read out from the buffer memory 12 to the registers 31 and 32 through the buffer memory I/O 24 and the parallel/serial converter 26, and is subjected to an error correction. Then, it is detected in which bit a code error exists by the decision by majority circuit 34, and the code error is corrected.

The principle of the error correction is based on the fact that the (272, 190) decision by majority code of the information data is dividable by the generation polynominal G(X) if there is no code error upon reception. Hereupon, the generation polynominal G(X) is represented by the following formula:

$$G(X) = X^{82} + X^{77} + X^{76} + X^{71} + X^{67} + X^{66} + X^{56}$$
$$+ X^{52} + X^{48} + X^{40} + X^{36} + X^{34} + X^{24} + X^{22}$$
$$+ X^{18} + X^{10} + X^{4} + 1$$

Where, the check codes $X^{81}, X^{80}, \ldots, X^{1}, X^{0}$ are remainders obtained by dividing the information bits $X^{271}, X^{270}, \ldots, X^{83}, X^{82}$ by the above-described generation polynominal G(X). Accordingly, the remainder obtained by dividing the information data of 190 bits by the generation polynominal G(X) becomes the check code of 82 bits for error correction. The data packet transmitted from the transmitter's side is constituted by the information data and the check code, and at the receiver's side the error correction is conducted by the decision by majority circuit using the information data of 190 bits and check code of 82 bits.

The corrected data in this way is stored again in the buffer memory 12 through the switch SW1 switched to the side of the terminal B and the shift register 21 in the same manner as in the aforementioned extraction. When the correction is completed the contents of the 82 bit syndrome register 31 become all "0".

As evident from the foregoing, only the detection of existence or non-existence of an error is conducted at the same time as the extraction of the character signal while storing data in the buffer memory 12, thereby enabling to store the character signal in the buffer memory 12 in real time. This assures to handle the data packets even when they are inserted in successive horizontal scanning lines.

Furthermore, the existence or non-existence of a code error in the data packet is detected during the horizontal scanning period in which the data packet is inserted, and the detection data is added to the data packet to be stored in the buffer memory. Accordingly, the CPU 13 can judge the existence or non-existence of an error in the data packet by only retrieving the N bit data at a special address of the buffer memory 12. This makes it possible to decode the code immediately when no code error exists, and enhances the efficiency in decoding to a great extent especially in a case where the receiving condition is good and no code error exists.

Furthermore, it is not necessary to conduct an error correction of a non-essential data packet even in a case where an error exists, and such a data packet can be abandoned. That is, the data packets of the same program number are transmitted inserted in horizontal scanning lines of the same scanning line number, and one of them becomes unnecessary. So, the data packet of the program which is not selected by a viewer can be abandoned. Accordingly, even if the receiving condition is bad and a code error is likely to occur, only an essential data packet has to be corrected, resulting in an increased efficiency of the error correction and the decoding.

As described above, according to a code transmission system character broadcasting receiver of the present invention, the detection of a code error in the character signal is conducted in real time at the same time as the extraction of the character signal from the video signal, and the detection data is added to the extracted character signal to be stored in the buffer memory, and in decoding the character signal in the buffer memory an essential character signal including an error is subjected to an error correction based on the detection data.

This construction makes it possible to handle the character signals even when they are inserted in successive horizontal scanning periods as well as to judge the existence or non-existence of a code error in each character signal by only retrieving the detection data. This construction, furthermore, makes it possible to handle essential character signals at a high efficiency.

**Claims**

1. A receiver for receiving a code transmission system character broadcasting signal which is inserted in, and transmitted during, the vertical blanking period of television video signal, which comprises:
an extracting circuit (11) for extracting a character signal inserted in the video signal;
a detector means (18) for detecting the existence or non-existence of a code error in the character signal during the horizontal scanning period following the vertical blanking period in which the character signal is inserted and outputting a detection signal;
a buffer memory (12) for storing the character signal accompanied by the detection signal temporarily;
a correcting means (18) for correcting an error in the character signal read out from the buffer memory as denoted by the detection signal;
and character signal decoding means (13); characterised in that
first switching means (SW1) associated with the extracting circuit (11) is switchable between a first condition (A) in which the video signal is directed to the extracting circuit (11) for extraction of the character signal and a second condition (B) in which the output of a corrected character signal is directed from said correction means (18) to said buffer memory (12);
and second switching means (SW2) associated with the detection means and correction means (18) switchable between a first condition (C) in which the video signal is received by the detecting means (18) for said code error detection and storage of the character signal and, if an error exists, of an error bit in said buffer memory (12) and a second condition (D) in which, in response to the presence of a said stored error bit, the stored character signal and error bit are directed to said correction means (18) whereby said character signal is corrected and, via said first switching means (SW1) switched into its second condition (B), restored to said buffer memory (12), wherein the switching means (SW1, SW2) are only switched from their respective first conditions (A, C) to their second conditions (B, D) in response to the presence of a said stored error bit in the buffer memory (12).

2. A receiver as claimed in claim 1, wherein in the error code correction the majority code of the information data is divisible by a generation polynomial G(X) when there is no code error, said polynomial G(X) being defined by the formula:

$$G(X)=X^{82}+X^{77}+X^{76}+X^{71}+X^{67}+X^{66}+X^{56}$$
$$+X^{52}+X^{48}+X^{40}+X^{36}+X^{34}+X^{24}+X^{22}$$
$$+X^{18}+X^{10}+X^{4}+1$$

Where, the check codes $X^{81}$, $X^{80}$, . . . , $X^{1}$, $X^{0}$ are remainders obtained by dividing the information bits $X^{271}$, $X^{270}$, . . . , $X^{83}$, $X^{82}$ by the above-described generation polynominal G(X).

3. A receiver as claimed in claim 1 or claim 2, wherein the decoding means (13) is included in a central processing unit (13) the central processing unit being arranged to retrieve the detection signal from the buffer memory (12) so as to determine whether or not to perform an error correction operation.

4. A receiver as claimed in any one of claims 1 to 3, wherein the buffer memory (12) is arranged to store the character signal again after error correction.

5. A receiver as claimed in any one of claims 1 to 4, wherein the means (18) for detecting a code error also includes the means for correcting the code error.

**Patentansprüche**

1. Empfänger zum Empfangen eines Systemcodezeichensignals bei der codierten Signalübertragung, welches Signal in die vertikale Austastlücke eines Fernsehvideosignals eingesetzt ist und innerhalb dieser übertragen wird, mit
—einer Abtrennschaltung (11) zum Extrahieren eines in das Videosignal eingesetzten Zeichensignals;
—einem Detektor (18) der während der horizontalen Abtastperiode, die auf die vertikale Austastlücke folgt, in die das Zeichensignal eingesetzt ist, ermittelt, ob ein Codierfehler im Zeichensignal vorhanden ist oder nicht, und zum Ausgeben eines Ermittlungssignals;
—einem Pufferspeicher (12) zum Zwischenspeichern des Zeichensignals zusammen mit dem Ermittlungssignal;
—einer Korrektureinrichtung (18) zum Korrigieren eines Fehlers in dem aus dem Pufferspeicher ausgelesenen Zeichensignal, wie er durch das Ermittlungssignal angezeigt wird; und

5

—einem Zeichensignaldecoder (13); gekennzeichnet durch

—einen der Abtrennschaltung (11) zugeordneten ersten Umschalter (SW1), der zwischen einer ersten Stellung (A), in der das Videosignal der Abtrennschaltung (11) zum Extrahieren des Zeichensignals zugeleitet wird, und einer zweiten Stellung (M) umschaltbar ist, in der ein korrigiertes Zeichenausgangssignal von der Korrektureinrichtung (18) zum Pufferspeicher (12) geleitet wird; und

—einen zweiten Umschalter (SW2), der dem Detektor und der Korrektureinrichtung (18) zugeordnet ist und der zwischen einer ersten Stellung (C) und einer zweiten Stellung (D) umschaltbar ist, wobei in der ersten Stellung das Videosignal vom Detektor (18) zur Codierfehlerermittlung und Speicherung des Zeichensignals übernommen wird um, falls ein Fehler vorhanden ist, ein Fehlerbit im Pufferspeicher (12) abzuspeichern, und in der zweiten Stellung bei Vorhandensein eines abgespeicherten Fehlerbits das gespeicherte Zeichensignal und das Fehlerbit der Korrektureinrichtung (18) zugeführt werden, wobei das Zeichensignal korrigiert und über den ersten Umschalter (SW1) in seiner zweiten Stellung (B) wieder im Pufferspeicher (12) gespeichert wird, und wobei die Umschalter (SW1, SW2) nur dann von der jeweiligen ersten Stellung (A, C) in die jeweilige zweite Stellung (B, D) umgeschaltet werden, wenn ein Fehlerbit im Pufferspeicher (12) gespeichert ist.

2. Empfänger nach Anspruch 1, bei dem bei der Fehlercodekorrektur der Hauptcode der Informationsdaten durch ein Generatorpolynom G(X) teilbar ist, wenn kein Codierfehler vorliegt, wobei das Polynom G(X) folgende Formel aufweist:

$$G(X) = X^{82} + X^{77} + X^{76} + X^{71} + X^{67} + X^{66} + X^{56}$$
$$+ X^{52} + X^{48} + X^{40} + X^{36} + X^{34} + X^{24} + X^{22}$$
$$+ X^{18} + X^{10} + X^4 + 1$$

und die Prüfcodes $X^{81}, X^{80}, \ldots, X^1, X^0$ Reste sind, die durch Teilen der Informationsbits $X^{271}, X^{270}, \ldots, X^{83}, X^{82}$ durch das oben angegebene Generatorpolynom G(X) erhalten werden.

3. Empfänger nach einem der Ansprüche 1 oder 2, bei dem der Decoder (13) Teil einer CPU (13) ist, die so geschaltet ist, daß sie das Ermittlungssignal aus dem Pufferspeicher (12) verarbeitet, um aus diesem zu bestimmen, ob eine Fehlerkorrektur auszuführen ist oder nicht.

4. Empfänger nach einem der Ansprüche 1 bis 3, bei dem der Pufferspeicher (12) das Zeichensignal nach einer Fehlerkorrektur erneut abspeichert.

5. Empfänger nach einem der Ansprüche 1 bis 4, bei dem der Detektor (18) für den Codierfehler die Einrichtung zum Korrigieren des Codierfehlers beinhaltet.

## Revendications

1. Récepteur pour recevoir un signal de diffusion de caractères d'un système de transmission de code qui est inséré dans, et transmis pendant, la période de suppression de trame d'un signal vidéo de télévision, qui comprend:

un circuit d'extraction (11) pour extraire un signal de caractère inséré dans le signal vidéo;

un moyen détecteur (18) pour détecter l'existence ou la non-existence d'une erreur de code dans le signal de caractère pendant la période de balayage horizontal suivant la période de suppression de trame dans laquelle le signal de caractère est inséré et pour produire en sortie un signal de détection;

une mémoire tampon (12) pour stocker le signal de caractère accompagné temporairement par le signal de détection;

un moyen correcteur (18) pour corriger une erreur dans le signal de caractère lu dans la mémoire tampon selon le signal de détection;

et un moyen (13) de décodage du signal de caractère, caractérisé en ce qu'un premier moyen de commutation (SW1) associé au circuit d'extraction (11) peut être commuté entre un premier état (A) dans lequel le signal vidéo est envoyé au circuit d'extraction (11) pour l'extraction du signal de caractère et un second état (B) dans lequel la sortie d'un signal de caractère corrigé est envoyée dudit moyen correcteur (18) à ladite mémoire tampon (12);

et un second moyen de commutation (SW2) associé au moyen détecteur et au moyen correcteur (18) commutable entre un premier état (C) dans lequel le signal vidéo est reçu par le moyen détecteur (18) pour ladite détection d'erreur de code et ledit stockage du signal de caractère et, si une erreur existe, d'un bit d'erreur dans ladite mémoire tampon (12) et un second état (D) dans lequel, en réponse à la présence dudit bit d'erreur stocké, le signal de caractère et le bit d'erreur stockés sont envoyés audit moyen correcteur (18) de sorte que ledit signal de caractère est corrigé et, par l'intermédiaire dudit premier moyen de commutation (SW1), rétabli dans ladite mémoire tampon (12), les moyens de commutation (SW1, SW2) étant seulement commutés de leurs premiers états (A, C) respectifs dans leurs seconds états (B, D) en réponse à la présence dudit bit d'erreur stocké dans la mémoire tampon (12).

2. Récepteur selon la revendication 1, dans lequel, dans la correction de code d'erreur, le code de majorité des données d'information est divisible par un polynôme générateur G(X) lorsqu'il n'y a pas d'erreur de code, ledit polynôme G(X) étant défini par la formule:

$$G(X) = X^{82} + X^{77} + X^{76} + X^{71} + X^{67} + X^{66} + X^{56}$$
$$+ X^{52} + X^{48} + X^{40} + X^{36} + X^{34} + X^{24} + X^{22}$$
$$+ X^{18} + X^{10} + X^4 + 1$$

dans laquelle les codes de contrôle $X^{81}$, $X^{80}$, ..., $X^1$, $X^0$ sont les restes obtenus en divisant les bits d'information $X^{271}$, $X^{270}$, ..., $X^{83}$, $X^{82}$ par le polynôme générateur $G(X)$ décrit ci-dessus.

3. Récepteur selon la revendication 1 ou la revendication 2, dans lequel le moyen de décodage (13) est inclus dans une unité centrale (13), l'unité centrale étant agencée pour extraire le signal de détection de la mémoire tampon (12) de façon à déterminer s'il faut ou non effectuer une opération de correction d'erreur.

4. Récepteur selon l'une quelconque des revendications 1 à 3, dans lequel la mémoire tampon (12) est agencée pour stocker de nouveau le signal de caractère après la correction d'erreur.

5. Récepteur selon l'une quelconque des revendications 1 à 4, dans lequel le moyen (18) pour détecter une erreur de code comprend aussi le moyen pour corriger l'erreur de code.

F I G .1.

F I G .2.

synchronizing
signal section · · · · · · · · · · · data section

|← 24 →| |←──────────────── 272 ────────────────→|
|←16→|←8→| |←──────── 190 ────────→| |←── 82 ──→|

| CR | FC | PFX | information data section | check code |

F I G .3.

|←──────────────── 272 ────────────────→|
|←8→| |←──────── 190 ────────→| |←── 82 ──→|←N→|

| FC | PFX | information data section | check code | detection data |

F I G 4.